# FASCICULE DE BREVET EUROPEEN

(11) **EP 0 419 385 B1**
(45) Date de publication et mention de la délivrance du brevet: **16.06.1993**
(21) Numéro de dépôt: 90420413.8
(22) Date de dépôt: 19.09.1990
(51) Int. Cl.: A23L 1/277, A23L 1/308, A23B 7/06

(54) **Procédé de fabrication de pulpes végétales blanchies**
Verfahren zur Herstellung von gebleichtem, pflanzlichem Fruchtfleisch
Process for the fabrication of bleached vegetable pulps

(30) Priorité: 21.09.1989 FR 8912616
(43) Date de publication de la demande: 27.03.1991
(73) Titulaire: ELF ATOCHEM S.A., 92800 Puteaux (FR)
(72) Inventeur: Devic, Michel, F-69110 Saint Foy Les Lyon (FR)

(56) Documents cités:
- CH-A- 491 607
- DE-A- 2 237 665
- FR-A- 2 382 866
- US-A- 4 241 093
- PATENT ABSTRACTS OF JAPAN, vol. 12, no. 50 (C-476)(2897), 16 février 1988; & JP - A - 62197304
- PATENT ABSTRACTS OF JAPAN, vol. 10, no. 276 (C-373)(2332), 10 septembre 1986; & JP-A-6196966

## Description

La présente invention concerne un procédé de fabrication de pulpes végétales blanchies, plus particulièrement de pulpes végétales à usage alimentaire blanchies à l'aide de peroxyde d'hydrogène.

Les pulpes végétales dont le blanchiment est visé par la présente invention sont par exemple celles de betterave sucrière ou non, d'agrumes, de fruits tels que pomme, pêche, poire, abricot, d'oléagineux comme le tournesol, de céréales comme le blé, le maïs ou l'avoine, de légumes comme le petit pois, après que le produit normalement valorisable à partir de chacune d'elles, comme le sucre, le jus de fruit, la pectine, l'huile, l'amidon, la farine, le cas échéant le grain, en ait été extrait ou séparé.

Ces pulpes constituent la matière végétale de base à laquelle est destiné le procédé de la présente invention et sont désignées dans tout ce qui suit par le seul terme de pulpe, sauf précision.

Elles se caractérisent par une teneur élevée en fibres alimentaires, déterminable par méthode enzymatique connue.

Elles sont utilisables dans l'industrie pour fabriquer des produits alimentaires, des farines par exemple. Mais le développement commercial de ces produits est malheureusement souvent freiné par une coloration trop foncée.

Pour améliorer cet état de chose, il a été proposé de soumettre les pulpes à l'action du peroxyde d'hydrogène en solution aqueuse alcaline, comme le propose par exemple le brevet des Etats Unis d'Amérique n°4241093.

Le procédé décrit dans ce brevet, comme plus généralement les procédés connus de la technique, comporte au terme de l'action du peroxyde d'hydrogène, l'élimination de la solution de blanchiment de la pulpe avant séchage de cette dernière. Cette élimination est classiquement réalisée par lavage de la pulpe, combinaison d'opérations de dilution par rinçage à l'eau et de concentration par pressage. Le lavage a entre autres inconvénients, celui de provoquer des pertes sensibles de matière végétale et/ou la génération d'effluents pollués par des matières organiques.

Toujours selon la technique connue la pulpe après élimination du peroxyde d'hydrogène est soumise à un séchage dont il est connu qu'il est communément effectué par évaporation d'eau en mettant la pulpe en contact pendant un court instant avec une atmosphère gazeuse qui est le plus généralement de la vapeur d'eau à haute température.

Ce séchage est pratiqué de manière à ce que la température à laquelle se trouve portée la pulpe n'entraîne pas de dégradation préjudiciable de la matière végétale.

Les conditions dans lesquelles est réalisé le séchage sont telles que l'eau éliminée de la pulpe reste à l'état de vapeur d'eau dans l'atmosphère gazeuse en contact avec la pulpe, atmosphère qualifiée par là de sèche.

Le séchage ainsi défini est désigné dans tout ce qui suit par le seul terme de séchage.

Pour ce qui concerne la betterave sucrière, l'obtention de la pulpe extraite, le lavage avec les problèmes qu'il pose et les contraintes qu'il entraîne, de même que le séchage, sont décrits par exemple dans "Sucrerie Française", Octobre 1985, 439-454.

Par pulpe sèche on entend dans tout ce qui suit, sauf précision, une pulpe de teneur en eau ne dépassant normalement pas environ 10 % à 11 % en poids du fait du séchage.

On sait qu'en procédant comme il est connu jusqu'à ce jour au blanchiment et au lavage de la pulpe avant séchage, la blancheur de la pulpe après séchage est souvent bien moindre que celle avant séchage.

Aussi les procédés connus conviennent-ils mal à la fabrication de pulpes à la fois sèches et suffisamment blanchies.

Le procédé de la présente invention ne présente pas les inconvénients des procédés connus, simplifie le schéma opératoire d'obtention de pulpes blanchies sèches et permet d'obtenir celles-ci avec un degré de blancheur élevé pour le domaine technique concerné.

La présente invention consiste en un procédé de fabrication de pulpes blanchies et sèches, dans lequel le blanchiment est réalisé au moyen de peroxyde d'hydrogène et le séchage par vaporisation de l'eau de la pulpe au moyen d'une atmosphère gazeuse sèche circulant au contact de la pulpe, caractérisé en ce que le blanchiment est réalisé simultanément au séchage.

Ce résultat est acquis sans avoir à éliminer de matière solide ou liquide de la pulpe depuis le début jusqu'à la fin du blanchiment-séchage simultané.

Par voie de conséquence un rendement pondéral en matière sèche pratiquement égal à 100 % est assuré alors que la technique connue n'assure qu'un rendement de l'ordre de 80 % pour la pulpe de betterave et de 60 % à 40 % pour la pulpe de fruit. Il n'y a pas génération, du fait du blanchiment-séchage simultané, d'effluents pollués par des produits organiques au contraire des procédés connus.

Tout ce qui a été dit plus avant à propos du seul séchage vaut pour le blanchiment-séchage simultané de la présente invention comme en particulier le choix des paramètres de façon à ne pas dégrader la pulpe ou le fait que l'eau éliminée de la pulpe par vaporisation reste sous forme de vapeur d'eau dans l'atmosphère gazeuse sèche. L'air, un gaz inerte comme ou la vapeur d'eau sèche sont le plus souvent utilisés pour constituer cette atmosphère gazeuse.

La vapeur d'eau sèche est normalement préférée pour des raisons de commodité, de coût et de sécurité.

La température de l'atmosphère gazeuse est le plus souvent comprise entre 20°C et 250°C et est déterminée en fonction de la capacité de séchage du type d'atmosphère choisi.

Dans le cas ou la vapeur d'eau sèche est utilisée, cette température pourra être par exemple comprise entre environ 150°C et 250°C et, dans ces limites, de préférence égale ou supérieure à 200°C.

La pression de l'atmosphère gazeuse doit être évidemment choisie inférieure à la pression de vapeur d'eau saturante à la température de la phase gazeuse. Elle est en général choisie entre environ 0,8 bar et 4 bars absolus.

La durée du blanchiment-séchage simultané n'excède normalement pas celle du séchage quand il est réalisé isolément. Le procédé de l'invention a donc un net avantage de productivité par rapport aux procédés connus.

Ladite durée varie évidemment de cas en cas, suivant la nature de la pulpe, le choix des autres paramètres. Elle peut être courte et ne pas excéder quelques secondes lorsque la température de la phase gazeuse est suffisamment élevée, par exemple supérieure à 150°C. Elle est en général inférieure à environ 10 heures. Elle est suffisante pour assurer normalement une consommation pratiquement totale du peroxyde d'hydrogène engagé ou au moins égale à environ 95 %.

Au terme du blanchiment-séchage simultané, la pulpe est séparée de l'atmosphère gazeuse par exemple au moyen d'un cyclone.

Une pulpe blanchie est dite sèche ici quand elle contient moins de 10 à 11 % d'eau en poids.

De préférence le pH de la pulpe au terme du blanchiment-séchage simultané est compris entre environ 4 et 8.

Ce pH préféré est plus précisément compris entre environ 5 et 7 pour la pulpe de betterave et pour la pulpe de fruit, entre environ 6 et 8 pour les sons de céréales comme le blé ou le maïs.

Le pH est ici, comme dans tout ce qui suit, mesure sur une suspension de pulpe contenant 3,5 % à 4,5 % en poids de matière sèche. Dans tout ce qui suit on appelle consistance de la pulpe, sa teneur en matière sèche exprimée en pour cent en poids.

La pulpe résultant du procédé de l'invention est fortement désodorisée par rapport à celle résultant d'un procédé connu.

La quantité de peroxyde d'hydrogène compté en 100 % qui est admise avec la pulpe dans le blanchiment-séchage simultané et qui est exprimée comme pour tout autre produit dans tout ce qui suit sauf précision ou évidence, en pour cent pondéral par rapport à la matière végétale à l'état sec, n'excède pas généralement 15 % environ. La quantité préférée varie selon les cas et elle est de préférence choisie entre 1 % et 10 %.

Pour le blanchiment-séchage simultané, des produits divers peuvent être ajoutés à la pulpe en même temps ou non que le peroxyde d'hydrogène,par exemple des agents complexants ou sequestrants des ions métalliques,comme le tripolyphosphate de sodium, des dérivés des acides pyrophosphoriques ou polyphosphoriques, l'acide citrique, des agents stabilisants du peroxyde d'hydrogène, des agents alcalins tels que l'hydroxyde de sodium, le carbonate de sodium, le benzoate de sodium, l'acétate de sodium.

Les agents alcalins sont ajoutés à certaines pulpes de pH initial par trop acide.

L'action des agents complexants ou sequestrants peut avoir lieu dans une opération distincte du blanchiment-séchage simultané, avec le cas échéant séparation desdits agents par lavage au terme de leur action avant le blanchiment-séchage simultané.

Parmi les produits stabilisants du peroxyde d'hydrogène figurent par exemple le silicate de sodium ou des composés de magnésium. Le premier est commodément engagé sous forme de solution commerciale de densité égale à 1,33, soit 36° Baumé, dont la quantité mise en oeuvre n'excède normalement pas 6 % et est le plus souvent comprise entre 2 et 5 % comme dans le cas de la pulpe de betterave. Le magnésium est engagé par exemple sous forme de magnésie ou d'hydroxyde de magnésium de façon à ce que la quantité de magnésium engagé soit comprise généralement entre environ 0,01 et 0,5 %.

La liqueur de blanchiment, constituée d'une solution aqueuse de peroxyde d'hydrogène et le cas échéant des produits qui l'accompagnent, est mélangée à la pulpe de manière à ce qu'à l'entrée du blanchiment-séchage simultané la consistance soit égale au moins à 10 % et de préférence comprise entre environ 20 % et 35 % pour la pulpe de betteraves. Le mélange est normalement réalisé à une température voisine de celle à laquelle se trouve la pulpe à ce moment et qui peut être comprise entre la température ambiante et environ 90°C, le plus souvent entre environ 60°C et 80°C dans le cas par exemple de la pulpe de betterave. Le mélange est réalisable par exemple au moyen d'un mélangeur à haute densité connu dans l'industrie de la pâte à papier ou d'une machine du type de celle décrite par exemple dans les brevets français publiés sous les numéros 2319737, 2418295, 2451963, 2436844.

Le mélange peut être encore réalisé en pulvérisant la liqueur de blanchiment sur la pulpe avant le blanchiment-séchage simultané.

On peut aussi mélanger la liqueur de blanchiment à une pulpe de basse consistance, par exemple comprise entre environ 5 % et 10 %, à une température comprise encore entre la température ambiante et environ 90°C, avant de concentrer la pulpe pour l'amener à la consistance et à la teneur en liqueur de blanchiment désirées pour le blanchiment-séchage simultané c'est-à-dire à l'état choisi pour le blanchiment-séchage simultané.

Le mélange du peroxyde d'hydrogène à la pulpe avant concentration peut être réalisé dans ce cas par exemple au moyen d'une mélangeur de type classique ou d'un mélangeur qu'il est connu de désigner sous le terme de mélangeur-disperseur, ou d'une pompe centrifuge.

Les diverses possibilités de mélange de la liqueur de blanchiment avec la pulpe peuvent être combinées entre elles.

Enfin la pulpe peut être soumise de façon connue à un blanchiment suivi ou non d'un lavage avant application du blanchiment-séchage simultané de l'invention.

L'appareillage dans lequel le blanchiment-séchage simultané est réalisé selon l'invention est celui connu pour convenir au séchage réalisé isolément selon un procédé connu, comme par exemple un sécheur à tambour, à lit fluidisé ou à vapeur.

Les exemples suivants, donnés à titre indicatif mais non limitatif illustrent la présente invention et permettent de juger de son intérêt par rapport à la technique connue.

Le degré de blancheur de la pulpe est mesuré sur une pastille de pulpe frittée sous pression et est exprimé en degrés ISO selon la norme de l'industrie papetière.

Les quantités de produit, de même que la consistance sont définies de la même manière qu'il a été indiqué plus avant. La pâte blanchie et sèche contient de 0 % à 10-11 % d'eau en poids comme cela a déjà été dit.

Le séchage ou le séchage-blanchiment simultané dans les exemples 1 à 13 est réalisé à pression atmosphérique.

### Exemple 1 :

Une pulpe de betterave de consistance égale à 28 % qui contient 4,1 g. de matière sèche est additionnée d'une quantité de peroxyde d'hydrogène égale à 10 % et d'eau de façon à ce que sa consistance soit égale à 20 %, puis est soumise durant 4,5 minutes à un blanchiment-séchage simultané dans lequel le séchage est assuré par de la vapeur sèche à une température comprise entre 240°C et 245°C qui circule au contact de la pulpe.

Plus de 95 % du peroxyde d'hydrogène engagé sont consommés durant le blanchiment-séchage simultané au terme duquel la pulpe blanchie et sèche a un poids égal à 4,1 g., une teneur en eau inférieure à 1 % en poids, un pH égal à 4,6 et un degré de blancheur égal à 39°ISO.

La même pulpe initiale, amenée à une consistance de 20 % uniquement par addition d'eau, sans addition de peroxyde d'hydrogène, est séchée comme ci-dessus. Au terme du séchage son degré de blancheur est égal à 23°ISO.

### Exemple 2 :

Le blanchiment-séchage simultané de l'exemple 1 est reproduit à la seule différence que le peroxyde d'hydrogène est accompagné dans son action par une quantité de silicate de sodium égale à 4 %.

On obtient 4,2 g. de pulpe blanchie sèche contenant moins de 1 % d'eau en poids.

La pulpe blanchie et sèche a cette fois un pH égal à 5,6 et un degré de blancheur égal à 41°ISO.

### Exemple 3 :

La même pulpe que dans l'exemple 1 contenant 4,1 g. de matière sèche, amenée à une consistance de 8 % par addition d'eau, est soumise à un traitement durant 15 minutes à 80°C au moyen de 0,5 % d'une solution à 40 % en poids du sel de sodium de l'acide éthylènetriaminepentaacétique puis à une concentration par pressage à une consistance de 27 % avant addition d'une quantité de peroxyde d'hydrogène égale à 10 %, d'une quantité de silicate de sodium égale à 4 %, et d'eau, de façon à ce que sa consistance soit égale à 20 %. Elle est soumise alors au blanchiment-séchage simultané comme dans l'exemple 1.

On obtient 4,4 g. de pulpe blanchie et sèche qui contient 6 % d'eau en poids et dont le degré de blancheur est égal à 40°ISO.

### Exemple 4 :

L'exemple 1 est répété à la seule différence que la quantité de peroxyde d'hydrogène est égale à 5 % au lieu de 10 %

Le degré de blancheur de la pulpe blanchie et sèche obtenue est égal déjà à 34° ISO.

### Exemple 5 (comparatif)

La même pulpe que dans les exemples précédents qui contient 4,1 g. de matière sèche est amenée à une consistance de 8 % à l'aide de 5 % de peroxyde d'hydrogène, 4 % de silicate de sodium, 1,5 % d'hydroxyde de sodium et 0,5 % de solution à 40 % de sel de sodium de l'acide éthylènetriaminepentaacétique, avant d'être blanchie durant 1 heure à 75°C puis lavée et pressée pour conduire à une pulpe de consistance égale à 20 % qui est séchée par de la vapeur d'eau sèche circulant à son contact durant 4,5 minutes à une température comprise entre 240°C et 245°C.

La pâte ainsi blanchie et séchée a un poids de 4 g., une teneur en eau de 6 % en poids et un degré de blancheur égal à 24°ISO qui est pratiquement celui atteint par séchage de la pulpe sans blanchiment constaté dans l'exemple 1.

### Exemple 6 :

L'exemple 5 est reproduit à la différence près que la concentration par pressage amène la pulpe à une consistance de 26 % et qu'ensuite on ajoute 5 % de peroxyde d'hydrogène et de l'eau pour avoir une consistance de 20 % avant séchage.

On obtient après séchage 3,9 g. de pulpe blanchie et sèche qui contient 4 % d'eau en poids.

Le degré de blancheur de la pulpe blanchie et sèche obtenue au terme du blanchiment-séchage selon l'invention est égal cette fois à 37° ISO donc proche de celui de la pulpe soumise au seul blanchiment-séchage simultané selon l'invention dans l'exemple 4.

### Exemple 7 :

A 4,4 g. de son de blé brut de séparation du grain qui contiennent 4 g. de matière sèche, on ajoute une quantité de peroxyde d'hydrogène égale à 10 % et de l'eau pour avoir une consistance de 56 % avant blanchiment-séchage simultané pendant 45 secondes au moyen de vapeur d'eau sèche à 245°C.

On obtient 4 g. de son séché et blanchi de teneur en eau inférieure à 1 %, de pH égal à 6,1 et de degré de blancheur égal à 28,7°ISO.

On répète l'opération ci-dessus en omettant d'ajouter le peroxyde d'hydrogène. Le degré de blancheur du son séché alors obtenu est égal seulement à 19°ISO.

### Exemple 8 :

On reproduit l'exemple 7 en ajoutant en plus du peroxyde d'hydrogène, 2 % de silicate de sodium et 0,5 % d'hydroxyde de sodium.

Le son séché et blanchi a un pH égal à 7,7 et un degré de blancheur égal à 31,7°ISO.

### Exemple 9 :

A 4,4 g. de son de maïs, ou drêche de maïs, qui contiennent 4 g. de matière sèche on ajoute une quantité de peroxyde d'hydrogène égale à 10 %, une quantité de silicate de sodium égale à 4 % et de l'eau pour avoir une consistance égale à 50 %, avant blanchiment-séchage simultané au moyen de vapeur sèche à 240°C durant 1 minute.

On obtient 4,1 g. de son de maïs blanchi et séché dont la teneur en eau est inférieure à 1 % en poids et le degré de blancheur égal à 31,3°ISO.

En opérant comme ci-dessus mais en l'absence de peroxyde d'hydrogène et de silicate de sodium, le degré de blancheur du son de maïs séché est de 14°ISO.

### Exemple 10 :

On reproduit l'exemple 9 en remplaçant le son de maïs par de la drêche de pomme en ajoutant 1 % d'hydroxyde de sodium en plus du peroxyde d'hydrogène et du silicate de sodium.

Le degré de blancheur après blanchiment-séchage simultané est égal à 15,3°ISO.

En procédant comme ci-dessus mais en l'absence de tout réactif, le degré de blancheur n'est plus que de 6,8°ISO.

### Exemple 11 :

L'exemple 9 est reproduit en remplaçant le son de maïs par de la pulpe d'agrume et en procédant au blanchiment-séchage simultané pendant 40 secondes au moyen de vapeur d'eau sèche à 245°C.

Le degré de blancheur de la pulpe blanchie sèche est de 17,8°ISO.

En procédant comme ci-dessus mais en l'absence de peroxyde d'hydrogène et de silicate de sodium, le degré de blancheur n'est plus que de 8,6°ISO.

### Exemple 12 :

De la pulpe de pomme, dite drêche de pomme contenant 4 g. de matière sèche est additionnée de 10 de peroxyde d'hydrogne, 4 % de silicate de sodium, 4 % d'hydroxyde de sodium et d'eau pour avoir une consistance égale à 30 % avant d'être soumis au blanchiment-séchage simultané au moyen d'air sec à 90°C pendant 6 heures.

La drêche blanchie et sèche a un pH égal à 5 et un degré de blancheur égal à 33°ISO.

En procédant comme ci-dessus mais en l'absence de peroxyde d'hydrogène, de silicate de sodium et d'hydroxyde de sodium, ce degré de blancheur n'est plus égal qu'à 14,4°ISO.

### Exemple 13 :

L'exemple 12 est répété sur de la pulpe d'agrume à l'exception de la consistance qui est de 20 % au ieu de 30 %.

La pulpe blanchie et sèche a un pH égal à 6 et un degré de blancheur égal à 30,8°ISO.

En opérant comme ci-dessus mais en l'absence de tout réactif, le degré de blancheur est égal à 16,3°ISO tandis que le degré de blancheur de la pulpe initiale est de 19,7°ISO.

## Revendications

1. Procédé de fabrication de pulpes végétales blanchies et sèches, dans lequel le blanchiment est réalisé à l'aide de peroxyde d'hydrogène et le séchage par vaporisation de l'eau de la pulpe au moyen d'une atmosphère gazeuse sèche circulant au contact de la pulpe, caractérisé en ce que le blanchiment est réalisé simultanément au séchage.

2. Procédé selon la revendication 1, caractérisé en ce que la quantité de peroxyde d'hydrogène ajoutée à la pulpe à blanchir et sécher simultanément n'excède pas 15 % en poids par rapport au poids de matière végétale à l'état sec.

3. Procédé selon la revendication 2, caractérisé en ce que la quantité de peroxyde d'hydrogène est comprise entre 1 % et 10 %.

4. Procédé selon l'une des revendications 1 à 3, caractérisé en ce que un ou des agents stabilisants du peroxyde d'hydrogène sont ajoutés à la pulpe à blanchir et sécher simultanément.

5. Procédé selon la revendication 4, caractérisé en ce que l'agent stabilisant est le silicate de sodium.

6. Procédé selon la revendication 5, caractérisé en ce que la quantité de silicate de sodium n'excède pas 6 % en poids par rapport au poids de matière végétale à l'état sec.

7. Procédé selon la revendication 6, caractérisé en ce que la quantité de silicate de sodium est comprise entre 2 et 5 %.

8. Procédé selon la revendication 4, caractérisé en ce que l'agent stabilisant est un composé du magnésium.

9. Procédé selon la revendication 8, caractérisé en ce que le composé de magnésium est choisi parmi la magnésie et l'hydroxyde de magnésium.

10. Procédé selon l'une des revendications 8 et 9, caractérisé en ce que la quantité de composé de magnésium, exprimée en magnésium, est comprise entre 0,01 et 0,5 %.

11. Procédé selon l'une des revendications 1 à 10, caractérisé en ce que des agents complexants ou sequestrants des ions métalliques sont ajoutés à la pulpe à blanchir et sécher simultanément.

12. Procédé selon la revendication 11, caractérisé en ce que le ou les agents complexants ou sequestrants sont choisis parmi le tripolyphosphate de sodium, des dérivés de l'acide pyrophosphorique, des acides polyphosphoriques, l'acide citrique.

13. Procédé selon l'une des revendications 1 à 12, caractérisé en ce que des agents alcalins sont ajoutés à la pulpe à blanchir et sécher simultanément.

14. Procédé selon la revendication 13, caractérisé en ce que l'agent alcalin est choisi parmi l'hydroxyde de sodium, le carbonate de sodium, le benzoate de sodium.

15. Procédé selon l'une des revendications 1 à 14, caractérisé en ce qu'il es choisi parmi l'air, un gaz inerte, la vapeur d'eau pour constituer l'atmosphère gazeuse sèche.

16. Procédé selon la revendication 15, caractérisé en ce que le gaz inerte est l'azote.

17. Procédé selon l'une des revendications 15 et 16, caractérisé en ce que la température de l'atmosphère gazeuse sèche est comprise entre 20°C et 250°C.

18. Procédé selon la revendication 17, caractérisé en ce que l'atmosphère gazeuse est la vapeur d'eau à une température comprise entre 150°C et 250°C.

19. Procédé selon la revendication 18, caractérisé en ce que la température de la vapeur d'eau a une temperature comprise entre 200°C et 250°C.

20. Procédé selon l'une des revendications 1 à 19, caractérisé en ce que le pH de la pulpe une fois simultanément blanchie et séchée est compris entre 4 et 8.

21. Procédé selon la revendication 20, caractérisé en ce que le pH est compris entre 5 et 7 quand la pulpe à blanchir et sécher simultanément est de la pulpe de betterave ou de la pulpe de fruit.

22. Procédé selon la revendication 20, caractérisé en ce que le pH est compris entre 6 et 8 quand la pulpe à blanchir et sécher simultanément est du son de céréale.

23. Procédé selon l'une des revendications 1 à 22, caractérisé en ce que la consistance de la pulpe qui est soumise au blanchiment et au séchage simultanément est égale ou supérieure à 10 %.

24. Procédé selon la revendication 23, caractérisé en ce que la consistance est comprise entre 20 % et 35 %.

25. Procédé selon l'une des revendications 1 à 24, caractérisé en ce que le peroxyde d'hydrogène avec les autres produits choisis pour être ajoutés avec lui, est ajouté à une pulpe de consistance n'excédant pas 10 % et qui, cette addition faite, est concentrée pour être amenée à l'état choisi pour son blanchiment simultanément au séchage.

26. Procédé selon la revendication 25, caratérisé en ce que la consistance de la pulpe à laquelle est ajouté le peroxyde d'hydrogène est comprise entre 5 % et 10 %.

27. Procédé selon l'une des revendications 1 à 26, caractérisé en ce que la durée pendant laquelle la pulpe est blanchie et séchée simultanément est telle que 95 % au moins du peroxyde d'hydrogène ajouté à la pulpe sont consommés.

28. Procédé selon l'une des revendications 1 à 27, caractérisé en ce que la pression de l'atmosphère gazeuse sèche est comprise entre 0,8 bar et 4 bars absolus.

## Claims

1. Process for producing bleached dry vegetable pulps, in which the bleaching process is carried out with the aid of hydrogen peroxide and the drying process by vaporising the water of the pulp by means of a dry gaseous atmosphere which circulates in contact with the pulp, characterised in that the bleaching process is carried out simultaneously with the drying process.

2. Process according to Claim 1, characterised in that the amount of hydrogen peroxide which is added to the pulp to be bleached and dried simultaneously does not exceed 15 % by weight in relation to the weight of dry vegetable matter.

3. Process according to Claim 2, characterised in that the amount of hydrogen peroxide is between 1 % and 10 %.

4. Process according to one of Claims 1 to 3, characterised in that one or more hydrogen peroxide stabilisers are added to the pulp to be bleached and dried simultaneously.

5. Process according to Claim 4, characterised in that the stabiliser is sodium silicate.

6. Process according to Claim 5, characterised in that the amount of sodium silicate does not exceed 6 % by weight in relation to the weight of dry vegetable matter.

7. Process according to Claim 6, characterised in that the amount of sodium silicate is between 2 and 5 %.

8. Process according to Claim 4, characterised in that the stabiliser is a magnesium compound.

9. Process according to Claim 8, characterised in that the magnesium compound is selected from magnesia and magnesium hydroxide.

10. Process according to one of Claims 8 and 9, characterised in that the amount of magnesium compound, expressed as magnesium, is between 0.01 and 0.5 %.

11. Process according to one of Claims 1 to 10, characterised in that the complexing agents or sequestering agents of metal ions are added to the pulp to be simultaneously bleached and dried.

12. Process according to Claim 11, characterised in that the complexing agent or sequestering agent, or complexing agents or sequestering agents, are selected from sodium tripolyphosphate, pyrophosphoric acid derivatives, polyphosphoric acids and citric acid.

13. Process according to one of Claims 1 to 12, characterised in that alkaline agents are added to the pulp to be simultaneously bleached and dried.

14. Process according to Claim 13, characterised in that the alkaline agent is selected from sodium hydroxide, sodium carbonate and sodium benzoate.

15. Process according to one of Claims 1 to 14, characterised in that air, an inert gas, or water vapour is selected to establish this dry gaseous atmosphere.

16. Process according to Claim 15, characterised in that the inert gas is nitrogen.

17. Process according to one of Claims 15 and 16, characterised in that the temperature of the dry gaseous atmosphere is between 20°C and 250°C.

18. Process according to Claim 17, characterised in that the gaseous atmosphere is water vapour at a temperature of between 150°C and 250°C.

19. Process according to Claim 18, characterised in that the water vapour has a temperature between 200°C and 250°C.

20. Process according to one of Claims 1 to 19, characterised in that the pH of the pulp once it has been simultaneously bleached and dried is between 4 and 8.

21. Process according to Claim 20, characterised in that the pH is between 5 and 7 when the pulp to be simultaneously bleached and dried is beet pulp or fruit pulp.

22. Process according to Claim 20, characterised in that the pH is between 6 and 8 when the pulp to be simultaneously bleached and dried is cereal bran.

23. Process according to one of Claims 1 to 22, characterised in that the consistency of the pulp which is subjected simultaneously to the bleaching process and the drying process is equal to, or higher than, 10 %.

24. Process according to Claim 23, characterised in that the consistency is between 20 % and 35 %.

25. Process according to one of Claims 1 to 24, characterised in that the hydrogen peroxide together with the other products selected to be added with it, is added to a pulp of a consistency of not more than 10 % which, once the substances have been added, is concentrated to be brought to the state selected for its bleaching process carried out simultaneously with the drying process.

26. Process according to Claim 25, characterised in that the consistency of the pulp to which the hydrogen peroxide is added is between 5 % and 10 %.

27. Process according to one of Claims 1 to 26, characterised in that the duration for which the pulp is simultaneously bleached and dried is such that at least 95 % of the hydrogen peroxide added to the pulp are consumed.

28. Process according to one of Claims 1 to 27, characterised in that the pressure of the dry gaseous atmosphere is between 0.8 bars and 4 bars absolute.

## Patentansprüche

1. Verfahren zur Herstellung von pflanzlichen, gebleichten und trockenen Pulpen, in denen die Bleiche mit Hilfe von Wasserstoffperoxid und die Trocknung durch Verdampfung des Wassers aus der Pulpe mittels einer trockenen Gasatmosphäre, die durch die Pulpe zirkuliert, realisiert wird, dadurch gekennzeichnet, daß die Bleiche gleichzeitig mit der Trocknung durchgeführt wird.

2. Verfahren nach Anspruch 1 dadurch gekennzeichnet, daß die Menge des zu der zu bleichenden und gleichzeitig zu trocknenden Pulpe zugegebenen Wasserstoffperoxids 15 Gew.-% des pflanzlichen Materials im trockenen Zustand nicht übersteigt.

3. Verfahren nach Anspruch 2, dadurch gekennzeichnet, daß die zugegebene Menge Wasserstoffperoxid zwischen 1 und 10 % liegt.

4. Verfahren nach einem der Ansprüche 1 bis 3, dadurch gekennzeichnet, daß ein oder mehrere Stabilisatoren für Wasserstoffperoxid zu der gleichzeitig zu bleichenden und zu trocknenden Pulpe gegeben werden.

5. Verfahren nach Anspruch 4, dadurch gekennzeichnet, daß der Stabilisator Natriumsilikat ist.

6. Verfahren nach Anspruch 5, dadurch gekennzeichnet, daß die Menge an Natriumsilikat 6 Gew.-% bezogen auf das pflanzliche Material im trockenen Zustand nicht übersteigt.

7. Verfahren nach Anspruch 6, dadurch gekennzeichnet, daß die Menge an Natriumsilikat zwischen 2 und 5 % liegt.

8. Verfahren nach Anspruch 4, dadurch gekennzeichnet, daß der Stabilisator eine Magnesiumverbindung ist.

9. Verfahren nach Anspruch 8, dadurch gekennzeichnet, daß als Magnesiumverbindung Magnesiumoxid oder Magnesiumhydroxid gewählt wird.

10. Verfahren nach einem der Ansprüche 8 und 9, dadurch gekennzeichnet, daß die Menge der Magnesiumverbindung, ausgedrückt als Magnesium, zwischen 0,01 und 0,5 % liegt.

11. Verfahren nach einem der Ansprüche 1 - 10, dadurch gekennzeichnet, daß komplexierende und maskierende Reagenzien für die Schwermetallionen der gleichzeitig zu bleichenden und zu trocknenden Pulpe zugesetzt werden.

12. Verfahren nach Anspruch 11, dadurch gekennzeichnet, daß ein oder mehrere komplexierende oder maskierende Reagenzien aus Natriumtripolyphosphat, den Derivaten der Pyrophosphorsäure, der Polyphosphorsäuren oder der Zitronensäure gewählt werden.

13. Verfahren nach einem der Ansprüche 1 - 12, dadurch gekennzeichnet, daß alkalische Reagenzien zu der gleichzeitig zu bleichenden und zu trocknenden Pulpe zugesetzt werden.

14. Verfahren nach Anspruch 13, dadurch gekennzeichnet, daß das alkalische Reagenz aus Natriumhydroxid, Natriumcarbonat oder Natriumbenzoat gewählt wird.

15. Verfahren nach einem der Ansprüche 1 - 14, dadurch gekennzeichnet, daß man zur Erzeugung der trockenen Gasatmosphäre entweder Luft, ein Inertgas oder Wasserdampf wählt.

16. Verfahren nach Anspruch 15, dadurch gekennzeichnet, daß das Inertgas Stickstoff ist.

17. Verfahren nach einem der Ansprüche 15 und 16, dadurch gekennzeichnet, daß die Temperatur der trockenen Gasatmosphäre zwischen 20 und 250 °C liegt.

18. Verfahren nach Anspruch 17, dadurch gekennzeichnet, daß die Gasatmosphäre Wasserdampf mit einer Temperatur zwischen 150 und 250 °C ist.

19. Verfahren nach Anspruch 18, dadurch gekennzeichnet, daß die Temperatur des Wasserdampfes zwischen 200 und 250 °C liegt.

20. Verfahren nach einem der Ansprüche 1 - 19, dadurch gekennzeichnet, daß der pH-Wert der Pulpe, die einmal gleichzeitig gebleicht und getrocknet wurde, zwischen 4 und 8 liegt.

21. Verfahren nach Anspruch 20, dadurch gekennzeichnet, daß der pH-Wert zwischen 5 und 7 liegt, wenn es sich bei der gleichzeitig zu bleichenden und trocknenden Pulpe um das Fruchtfleisch der Zuckerrübe oder die Pulpe von Früchten handelt.

22. Verfahren nach Anspruch 20, dadurch gekennzeichnet, daß der pH-Wert zwischen 6 und 8 liegt, wenn die gleichzeitig zu bleichende und zu trocknende Pulpe Getreidekleie ist.

23. Verfahren nach einem der Ansprüche 1 - 22, dadurch gekennzeichnet, daß die Stoffdichte der Pulpe, die der gleichzeitigen Bleiche und Trocknung unterworfen wird, 10 oder mehr Prozent beträgt.

24. Verfahren nach Anspruch 23, dadurch gekennzeichnet, daß die Stoffdichte zwischen 30 und 35 % liegt.

25. Verfahren nach einem der Ansprüche 1 - 24, dadurch gekennzeichnet, daß das Wasserstoffperoxid mit den anderen Produkten, die mit ihm zugegeben werden, einer Pulpe mit einer Stoffdichte, die 10 % nicht übersteigt, zugefügt wird, und die nach erfolgter Zugabe konzentriert wird, um in den gewählten Zustand für die gleichzeitige Bleiche und Trocknung gebracht zu werden.

26. Verfahren nach Anspruch 25, dadurch gekennzeichnet, daß die Stoffdichte der Pulpe, der Wasserstoffperoxid zugefügt wurde, zwischen 5 und 10 % liegt.

27. Verfahren nach einem der Ansprüche 1 - 26, dadurch gekennzeichnet, daß die Dauer während der die Pulpe gleichzeitig gebleicht und getrocknet wird, so lang ist, daß wenigstens 95 % des zur Pulpe zugesetzten Wasserstoffperoxids verbraucht sind.

28. Verfahren nach einem der Ansprüche 1 - 27, dadurch gekennzeichnet, daß der Druck der trockenen Gasatmosphäre zwischen 0,8 und 4 bar liegt.
